Europäisches Patentamt

European Patent Office

Office européen des brevets

(19)

(11) Veröffentlichungsnummer : **0 328 201 B1**

(12)

# EUROPÄISCHE PATENTSCHRIFT

(45) Veröffentlichungstag der Patentschrift :
**12.08.92 Patentblatt 92/33**

(51) Int. Cl.⁵ : **B65G 47/14**

(21) Anmeldenummer : **89200245.2**

(22) Anmeldetag : **03.02.89**

(54) **Verfahren und Vorrichtung zum Ausrichten und geordneten Ablegen von Formkörpern mit einem rohrartigen Durchbruch.**

(30) Priorität : **09.02.88 DE 3803811**

(43) Veröffentlichungstag der Anmeldung :
**16.08.89 Patentblatt 89/33**

(45) Bekanntmachung des Hinweises auf die
Patenterteilung :
**12.08.92 Patentblatt 92/33**

(84) Benannte Vertragsstaaten :
**DE FR GB**

(56) Entgegenhaltungen :
**DE-A- 2 631 174**
**FR-A- 2 581 047**

(73) Patentinhaber : **Philips Patentverwaltung GmbH**
**Wendenstrasse 35 Postfach 10 51 49**
**W-2000 Hamburg 1 (DE)**
(84) **DE**
Patentinhaber : **N.V. Philips'**
**Gloeilampenfabrieken**
**Groenewoudseweg 1**
**NL-5621 BA Eindhoven (NL)**
(84) **FR GB**

(72) Erfinder : **Müller, Torsten**
**Badenstedter Strasse 4**
**W-3000 Hannover 91 (DE)**

(74) Vertreter : **Kupfermann, Fritz-Joachim,**
**Dipl.-Ing. et al**
**Philips Patentverwaltung GmbH**
**Wendenstrasse 35 Postfach 10 51 49**
**W-2000 Hamburg 1 (DE)**

## Beschreibung

Die Erfindung bezieht sich auf ein Verfahren und eine Vorrichtung zum Ausrichten und geordneten Ablegen von Formkörpern mit einem rohrartigen Durchbruch, insbesondere der Spulenkörper von Transformatoren.

Spulenkörper für Transformatoren werden üblicherweise von der Spritzmaschine, in der sie gespritzt wurden, ungeordnet angeliefert. Für die Weiterverarbeitung, beispielsweise für das Einschlagen von Anschlußstiften oder das Bewickeln mit Spulendraht, müssen sie zuvor in einer bestimmten Ordnung ausgerichtet werden. Dieses Ausrichten erfolgt allgemein mit sogenannten Vibrationsförderern. Diese Vibrationsförderer bestehen aus voluminösen trichterartigen Töpfen, an deren Wand sich eine spiralförmig abwärts wendelnde Transportbahn vorgesehen ist, auf der sich mechanische Schikanen befinden. Diese mechanischen Schikanen sind so angestellt, daß alle Formkörper, die auf der Förderbahn nicht in der richtigen Richtung liegen, abgeworfen werden oder - soweit dies möglich ist- durch eben diese Schikanen in die gewünschte Lage, genauer gesagt Orientierung, gebracht werden.

Für jeden bestimmten Typ eines Formkörpers oder Bauteiles ganz allgemein wird ein spezieller Vibrationsförderer benötigt. Es muß also für jeden Formkörper ein eigener Vibrationsförderer oder zumindest ein Topfaufsatz auf Vorrat gehalten werden, der jeweils bei Bedarf auf eine Ausrichtvorrichtung vor einer Behandlungsstation aufgesetzt wird. Große Formkörper haben auch große Vibrationsfördertöpfe zur Folge. Es wird also sehr viel Lagerraum benötigt, um die einzelnen Vibrationsfördertöpfe auf Vorrat zu halten.

Es ist Aufgabe der Erfindung, ein Verfahren und eine Vorrichtung zum Ausrichten und ausgerichteten Ablegen von Formkörpern zu schaffen, das schnell arbeitet, bei dem für den Wechsel von einem Formkörper zum anderen nur wenige Teile auszutauschen sind und bei dem die auszutauschenden Vorrichtungsteile einen geringen Lagerraum benötigen.

Die gestellte Aufgabe ist erfindungsgemäß gelöst durch ein Verfahren, das dadurch gekennzeichnet ist, daß in einen Wirbelraum oberhalb eines Aufnahmedornes in Form des Durchbruches im Formkörper von oben nacheinander einzelne Formkörper hineingebracht werden, daß jeder Formkörper im Wirbelraum freischwebend einem Luftwirbel zumindest mit einem nach oben gerichten Luftstrom ausgesetzt wird, bis sich der Formkörper mit seinem Durchbruch gegenüber dem Aufnahmedorn so ausgerichtet hat, daß der Formkörper infolge eines sich durch das Ausrichten vermindernden Luftwiderstandes auf den Aufnahmedorn herauffällt, und daß der Aufnahmedorn den Formkörper ausgerichtet auf wenigstens eine Ablageförderschiene übergibt.

Der Luftwirbel in der Wirbelkammer ist in der Lage, den Formkörper zu verkugeln und zu verdrehen (Rotation um die drei Körperachsen). Aufgrund des Eigengewichtes und der auf den Formkörper wirkenden Hebekräfte des Luftwirbels verkugelt dieser so lange, bis sich sein Durchbruch fluchtend gegenüber dem Aufnahmedorn einstellt. In diesem Augenblick beruhigt sich seine Bewegung schlagartig, weil ein Teil der Luft durch den Durchbruch hindurchströmt. Die Auftriebskräfte verschwinden, und der Formkörper fällt auf den Aufnahmedorn, der ihn dann an eine Förderschiene abgibt. Das flexible Ordnen im Luftstrom geht schnell vor sich. Der Durchmesser der Wirbelkammer braucht nur wenig größer zu sein als die größte Ausdehnung des Formkörpers.

Nach einer weiteren Ausgestaltung der Erfindung ist vorgesehen, daß der Luftwirbel aus mehreren unterschiedlich ausgerichteten Luftströmen gebildet wird. Mittels mehrerer, in ihrer Blasstärke gesteuerter Luftströme läßt sich der Wirbel ständig an die gewünschten Anforderungen anpassen.

Nach einer weiteren Ausgestaltung der Erfindung ist vorgesehen, daß die Stellung des Formkörpers auf dem Aufnahmedorn mittels Sensoren zur Anwesenheits- und Orientierungskontrolle überwacht wird.

Nach einer weiteren Ausgestaltung der Erfindung ist vorgesehen, daß ein erster Luftstrom vom Aufnahmedorn aus senkrecht nach oben und ein zweiter Luftstrom etwa quer dazu blasen und daß dabei beide zusammen auf den Formkörper einwirken. Bei geeigneter Bemessung des Luftstromes wird der Formkörper über den senkrecht nach oben aus dem Aufnahmedorn austretenden Luftstrom mit konstantem Luftaustritt in der Schwebe gehalten, während der zweite Luftstrom ein gepulster Luftstrom ist, der den Formkörper oberhalb des Aufnahmedornes in Rotation versetzt. Der Formkörper sinkt nur dann auf den Aufnahmedorn ab, wenn er eine Orientierung erreicht hat, bei der der Durchbruch im Formkörper dem Luftstrom einen verminderten Strömungwiderstand entgegensetzt.

Eine Vorrichtung zur Durchführung des Verfahrens nach der Erfindung ist gekennzeichnet durch
– einen im Bodenbereich eines vertikalen Umbehälters befindlichen, vertikal nach oben ausgerichteten Aufnahmedorn, dessen Querschnitt dem Querschnitt des Durchbruches in einem auf ihn aufzusetzenden ausgerichteten Formkörper entspricht,
– Luftaustrittsdüsen, die oberhalb des Aufnahmedornes im Umbehälter einen Luftwirbel erzeugen, in dem der Formkörper freischwebend und verkugelnd bewegbar ist,
– Sensoren, die die Stellung des Formkörpers nach dessen Ablage auf den Aufnahmedorn orten,
– eine Bewegungsvorrichtung für den Aufnahmedorn, um Formkörper, die sich gerichtet auf ihn aufgesetzt

2

haben, an eine Ablageförderschiene zu übergeben.

Die gesamte Ausrichtvorrichtung besteht mithin nur aus dem vertikal stehenden Umbehälter, in dem ein Luftwirbel erzeugt wird, und einem Aufnahmedorn an der Unterseite des Umbehälters, auf den ein im Luftwirbel ausgerichteter Formkörper auffallen kann. Die Bewegungsvorrichtung des Aufnahmedornes macht es möglich, ihn seitlich zu kippen oder um seine vertikale Achse zu drehen. Es wird dadurch möglich, die unterschiedlichen Endflansche auch hinsichtlich der Lage der Endflansche auszurichten und an Ablageförderschienen zu übergeben.

Nach einer weiteren Ausgestaltung der Erfindung ist vorgesehen, daß der Umbehälter einen kreisförmigen Querschnitt aufweist. Durch einen kreisförmigen Querschnitt wird ein regelmäßiger Wirbel erzielt und ein ungehindertes Drehen der Formkörper ermöglicht.

Nach einer weiteren Ausgestaltung der Erfindung ist vorgesehen, daß der Aufnahmedorn um eine horizontale Achse kippbar ist. Durch das Kippen um die horizontale Achse werden die Formkörper entweder unmittelbar oder über Kopf auf die Ablageförderschiene übergeben.

Nach einer weiteren Ausgestaltung der Erfindung ist vorgesehen, daß der Aufnahmedorn um eine vertikale Achse drehbar ist. Durch das Drehen um die vertikale Achse können auch Vorder- und Rückseite vor dem Ablegen auf die Ablageförderschiene ausgewechselt werden.

Nach einer weiteren Ausgestaltung der Erfindung ist vorgesehen, daß der Umbehälter oben offen ist zum Auffangen hineingeworfener Formkörper. Um die Ausrichtvorrichtung in Funktion zu setzen, ist es also nur erforderlich, die Formkörper einzeln in den Umbehälter hineinzuwerfen. Dem Ausrichten braucht also nur ein Vereinzeln, gleich welcher Art, voranzugehen.

Nach einer weiteren Ausgestaltung der Erfindung ist vorgesehen, daß eine erste, vertikal nach oben gerichtete Luftdüse für den vertikalen Luftstrom vorgesehen ist und daß eine zweite Luftdüse quer oder unter einem Winkel zur ersten Luftdüse ausgerichtet ist und einen Verwirbelstrom abgibt.

Die Erfindung wird anhand der Zeichnung näher erläutert. Es zeigen:

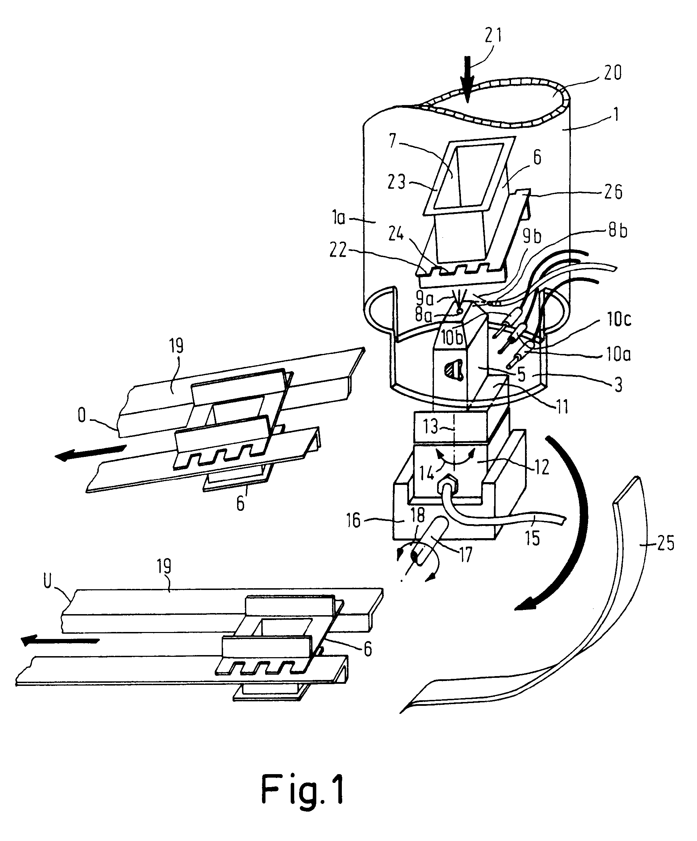

Fig. 1 eine Vorrichtung zum Ausrichten und geordneten Ablegen von Formkörpern mit einem rohrartigen Durchbruch,

Fig. 2 bis 7 Zentrier- bzw. Aufnahmedorne der Vorrichtung nach Fig. 1 in verschiedener Formgebung, teilweise in einem Umbecher mit eingeführter Luftdüse.

Die Zeichnung zeigt eine Vorrichtung zum Ausrichten und geordneten Ablegen von Formkörpern mit einem rohrartigen Durchbruch, insbesondere von Spulenkörpern für Transformatoren. Die Vorrichtung und das Verfahren zum Ausrichten eignet sich aber in gleicher Weise für Formkörper jeder Art, die aus einer ungeordneten Aufbewahrung geordnet einem Arbeitsplatz zugeführt werden müssen. Die Vorrichtung besteht aus einem Umbehälter 1 von zylindrischer Gestalt, der vertikal aufgestellt ist. Der Umbehälter kann beispielsweise aus einem durchsichten Kunststoff bestehen. Der Umbehälter umschließt einen Wirbelraum 1a. Es werden vorzugsweise mehrere Umbehälter mit verschiedenen Durchmessern auf Vorrat gehalten, wobei jeder Umbehälter für eine bestimmte Gruppe von Abmessungsdimensionierungen der Formkörper geeignet ist.

In den Umbehälter 1 greift von der Unterseite 3 her ein Zentrier- und Aufnahmedorn 5 hinein. Dieser Zentrier- und Aufnahmedorn hat in der Horizontalen einen Querschnitt, der dem Querschnitt eines Formkörpers, der im Umbehälter 1 ausgerichtet werden soll, so angenähert ist, daß der Formkörper 6 mit seinem Durchbruch 7 auf den Aufnahmedorn 5 herauffallen kann.

Es sind wenigstens zwei Luftdüsen vorgesehen, und zwar eine erste Luftdüse 8a, aus der in vertikaler Richtung Preßluft nach oben ausströmt. Die Ausströmachse der Düse 8a und die Achse des Umbehälters 1 werden dabei vorzugsweise zusammenfallen. Die erste Luftdüse 8a befindet sich im Aufnahmedorn 5.

Eine zweite Luftdüse 8b ist außerhalb des Aufnahmedornes 5 angeordnet. Die die zweite Luftdüse 8b verlassende Luftströmung 9b verläßt die Düse 8b entweder senkrecht oder unter einem Winkel zu der die Luftdüse 9a verlassenden Luftströmung 9a. Der Luftstrom 9a bildet oberhalb des Aufnahmedornes 5 eine Art Luftpolster, und der Luftstrom 9b aus der Düse 8b verwirbelt dieses Luftpolster. Auf diese Weise ergibt sich im wirbelraum 1a ein Luftwirbel, in dem der Formkörper 7 ausrichtbar ist. Die Luftströmung 9a verläßt die Luftdüse 8a in konstantem Strom. Die Luftströmung 9b verläßt die Luftdüse 8b hingegen in pulsierender Form. Dieses Pulsieren vermindert die Ausrichtzeit des Formkörpers 7 oberhalb des Aufnahmedornes 5.

Die Luftströme 9a und 9b werden durch nicht dargestellte Drosselventile eingestellt. Die Einstellung der Drosselventile kann durch Schrittmotoren programmierbar vorgenommen werden.

Es sind mindestens drei elektrisch arbeitende Sensoren 10a, 10b und 10c vorgesehen, die die Stellung des Formkörpers auf dem Aufnahmedorn 5 überwachen. Die Sensoren 10a, 10b und 10c können Infrarot-Sensoren sein. Die Sensoren 10a, 10b und 10c sind in der Zeichnung getrennt vom Aufnahmedorn dargestellt; sie können ohne weiteres aber auch am Fuß 11 des Aufnahmedornes 5 angeordnet werden; sie dienen nämlich bevorzugt der Lageortung des Formkörpers auf dem Aufnahmedorn. Von dieser Lageortung wird bestimmt, wie der Formkörper vom Aufnahmedorn abgelegt wird.

Der Fuß 11 des Aufnahmedornes 5 ist auf einem Träger 12 um eine Achse 13 verdrehbar. Die Verdrehbarkeit ist durch einen Doppelpfeil 14 angegeben. In den Träger 12 kann die Luft für die Luftdüse 8a beispielsweise mittels einer Zuleitung 15 eingeführt werden.

Der Träger 12 ist in eine Aufnahme 16 eingesetzt, die um eine Achse 17 verkippbar ist, die vertikal zu der Achse 13 verläuft. Ein Doppelpfeil 18 gibt die Verkippbarkeit der Aufnahme 16 wieder.

Es ist eine Ablageförderschiene 19 vorgesehen, die zwischen einer oberen Stellung O und einer unteren Stellung U auf nicht dargestellte Weise verschwenken kann.

Das Ausrichten des Formkörpers 7 in der Vorrichtung erfolgt auf folgende Weise. In den an seiner Oberseite 20 offenen Umbehälter 1 wird in Richtung eines Pfeiles 21 der Formkörper 7 auf nicht näher dargestellte Weise hineingeworfen. Der Luftstrom 9a bildet oberhalb des Aufnahmedornes 5 ein Polster, und der Luftstrom 9b sorgt pulsierend für einen Luftwirbel im Luftpolster. Fällt nun der Formkörper 7 in diesen Luftwirbel hinein, dann wird er verkugelt, und zwar so lange, bis sich der Durchbruch 7 gegenüber dem Aufnahmedorn 5 ausgerichtet hat. Sowohl der Aufnahmedorn 5 als auch der Durchbruch 7 haben beim Ausführungsbeispiel einen rechteckigen Querschnitt. Sobald sich der Durchbruch 7 gegenüber dem Aufnahmedorn 5 ausgerichtet hat, bläst der Luftstrom 9a verstärkt durch den Durchbruch 7 hindurch. Dadurch verringert sich der Luftwiderstand unterhalb des Formkörpers 6 (schwächt sich das Luftpolster ab), und er fällt auf den Aufnahmedorn 5 auf. Die Sensoren 10a, 10b und 10c notieren dieses Auffallen auf den Aufnahmedorn 5 und melden gleichzeitig seine Orientierung auf dem Aufnahmedorn 5. Der Formkörper 6 kann nämlich auf verschiedene Weise auf den Dorn 5 auffallen, wenn er, wie im Ausführungsbeispiel, zwei unterschiedlich ausgebildete Flansche 22, 23 aufweist. Der Flansch 23 ist kurz und rundum gleichmäßig hoch, während der Flansch 22 einseitige Anschlagstellen 24 für Anschlußdrähte aufweist. Fällt der Formkörper 6 in der in der Zeichnung dargestellten Weise auf den Aufnahmedorn, dann liegen die Anschlagstellen 24 vorn unten. Das bedeutet, daß der Formkörper, dessen Anschlagstellen im Beispiel oben liegen sollen, umgedreht werden müssen. Der Aufnahmedorn 5 wird deshalb mit der Welle 17 im Uhrzeigersinn verschwenkt, und ein Führungsblech 25 kehrt den Formkörper 6 auf den Kopf, so daß er in der richtigen Lage auf den mit U unten dargestellten Teil der Ablageführungsschiene 19 aufrutscht. Hätte der größere Flansch 22 mit den Anschlagstellen 24 beim Auffallen auf den Aufnahmedorn 5 oben vorn gelegen, dann wäre der Dorn 5 um die Achse 17 entgegen dem Uhrzeigersinn gekippt worden. Der Formkörper 6 wäre dann wieder in der richtigen Weise, diesmal aber auf den oben dargestellten Führungsschienenteil O aufgelaufen. Wenn nun zwischen Anschlagstellen 24 und weiteren Anschlagstellen 26 unterschieden werden müßte, dann kann dies durch das Drehen des Aufnahmedornes 5 um die Achse 13 berücksichtigt werden. Die Sensoren 10a, 10b und 10c geben zu all diesen Verstellvorgängen des Aufnahmedornes 5 die richtigen und notwendigen Kommandos.

Für jeden Formkörper wird ein anderer Aufnahmedorn benötigt. Deshalb werden für jeden Formkörper ein anderer Aufnahmedorn 5 mit Fuß 11 zum Austausch bereitgehalten. Die auszutauschenden Teile sind klein und leicht auswechselbar.

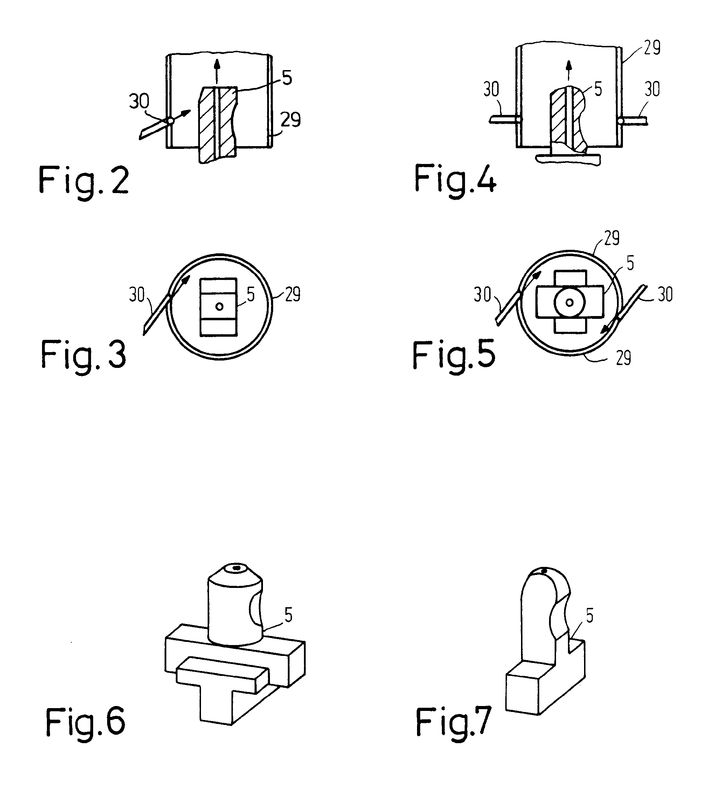

Die Fig. 2 bis 7 zeigen unterschiedliche Formgebungen von Orientierungen und Aufnahmedornen 5 in einem Umbecher 29, in den eine Luftdüse 30 Luft einführen kann. Die Formgebung der Dorne 5 kann dabei zu Luftwirbeln um die Dorne 5 führen, die die Orientierung der Formkörper erleichtern und beschleunigen helfen.

**Patentansprüche**

1. Verfahren zum Ausrichten und geordneten Ablegen von Formkörpern (6) mit einem rohrartigen Durchbruch (7), insbesondere der Spulenkörper von Transformatoren, dadurch gekennzeichnet, daß in einen Wirbelraum oberhalb eines Aufnahmdornes (5) in Form des Durchbruches (7) im Formkörper (6) von oben nacheinander einzelne Formkörper (6) hineingebracht werden, daß der einzelne Formkörper im Wirbelraum freischwebend einem Luftwirbel zumindest mit einem nach oben gerichteten Luftstrom ausgesetzt wird, bis sich der Formkörper (6) mit seinem Durchbruch (7) gegenüber dem Aufnahmedorn (5) so ausgerichtet hat, daß der Formkörper (6) infolge eines sich durch das Ausrichten vermindernden Luftwiderstandes auf den Aufnahmedorn (5) herauffällt, und daß der Aufnahmedorn (5) den Formkörper (6) ausgerichtet auf wenigstens eine Ablageförderschiene (19) übergibt.

2. Verfahren nach Anspruch 1, dadurch gekennzeichnet, daß der Luftwirbel aus mehreren unterschiedlich ausgerichtetn Luftströmen (9a, 9b) gebildet wird.

3. Verfahren nach einem der Ansprüche 1 oder 2, dadurch gekennzeichnet, daß die Stellung des Formkörpers (6) auf dem Aufnahmedorn mittels Sensoren zur Anwesenheits- und Orientierungskontrolle überwacht wird.

4. Verfahren nach Anspruch 2, dadurch gekennzeichnet, daß ein erster Luftstrom (9a) nach oben und ein überwiegend quer dazu blasender zweiter Luftstrom (9b) den Luftwirbel bilden.

5. Verfahren nach Anspruch 4, dadurch gekennzeichneet, daß der erste Luftstrom (9a) mit konstantem Fluß nach oben strömt.

6. Verfahren nach Anspruch 4, dadurch gekennzeichnet, daß der zweite Luftstrom (9b) impulsweise arbeitet.

7. Vorrichtung zur Durchführung des Verfahrens nach den Ansprüchen 1 bis 6, gekennzeichnet durch
– einen im Bodenbereich (3) eines vertikalen Umbehälters (1) befindlichen, vertikal nach oben ausgerichteten Aufnahmedorn (5), dessen Querschnitt dem Querschnitt des Durchbruches (7) in einem auf ihn aufzusetzenden ausgerichteten Formkörper (6) entspricht,
– Lufdtaustrittsdüsen (8a, 8b), die oberhalb des Aufnahmedornes (5) im Umbehälter (1) einen Luftwirbel erzeugen, in dem der Formkörper (6) freischwebend und verkugelnd bewegbar ist,
– Sensoren (10a, 10b, 10c), die die Stellung des Formkörpers (9) nach dessen Ablage auf dem Aufnahmedorn orten,
– eine Bewegungsvorrichtung (11 bis 18) für den Aufnahmedorn (5), um Formkörper (6), die sich gerichtet auf ihn aufgesetzt haben, an eine Ablageförderschiene (19) zu übergeben.

8. Vorrichtung nach Anspruch 7, dadurch gekennzeichnet, daß der Umbehälter (1) einen kreisförmigen Querschnitt aufweist.

9. Vorrichtung nach Anspruch 7, dadurch gekennzeichnet, daß der Aufnahmedorn (5) um eine horizontale Achse (17) kippbar ist.

10. Vorrichtung nach Anspruch 7, dadurch gekennzeichnet, daß der Aufnahmedorn (5) um eine vertikale Achse (13) drehbar ist.

11. Vorrichtung nach Anspruch 8, dadurch gekennzeichnet, daß der Umbehälter (1) oben offen ist zum Auffangen hineingeworfener Formkörper (6).

12. Vorrichtung nach Anspruch 7, dadurch gekennzeichnet, daß eine erste, vertikal nach oben gerichtete Luftdüse (8a) für den vertikalen Luftstrom (9b) vorgesehen ist und daß eine zweite Luftdüse (8b) quer oder unter einem Winkel zur ersten Luftdüse (8a) ausgerichtet ist und einen Verwirbelstrom (9b) abgibt.

13. Vorrichtung nach Anspruch 7, dadurch gekennzeichnet, daß die erste Luftdüse (8a) im Aufnahmedorn (5) vorgesehen ist.

## Claims

1. A method for the alignment and ordered distribution of shaped parts (6) having a tubular aperture (7), more particularly the coil formers of transformers, characterized in that individual mouldings (6) are introduced successively from above into a turbulence chamber above a receiving mandrel (5) which has the shape of the aperture (7) in the moulding (6), in that the individual moulding floating freely in the turbulence space is subjected to an air turbulence comprising at least one air flow directed upwards until the moulding (6) has been aligned with aperture (7) relative to the receiving mandrel (5) in such a manner that the moulding (6) drops onto the receiving mandrel (5) owing to an air resistance decreasing as a result of the alignment, and in that the receiving mandrel (5) passes the moulding (6) on correctly aligned to at least one deposition transport rail (19).

2. A method as claimed in Claim 1, characterized in that the air turbulence is formed form several differently aligned air currents (91, 9b).

3. A method as claimed in any one of Claims 1 or 2, characterized in that the position of the moulding (6) on the receiving mandrel is monitored by means of sensors for a presence and orientation check.

4. A method as claimed in Claim 2, characterized in that a first air current (9a) in upward direction and a second air current (9b) may blowing transversely thereto form the air turbulence.

5. A method as claimed in Claim 4, characterized in that the first air current (9a) flows upwards with constant flow.

6. A method as claimed in Claim 4, characterized in that the second air current (9b) acts in a pulsating manner.

7. A device for carrying out the method claimed in Claims 1 to 6, characterized by
– a receiving mandrel (5) which is arranged in the lower part (3) of a vertical enclosure (1), which is aligned vertically upwards and whose cross-section corresponds to the cross-section of the aperture (7) in a moulding (6) to be placed on it after alignment;
– air discharge nozzles (81, 8b) which produce an air turbulence in which the moulding (6) is movable in a freely floating and revolving manner above the receiving mandrel (5) in the enclosure (1);
– sensors (10a, 10b, 10c) which locate the position of the moulding (6) after its deposition on the receiving mandrel;

– a mover device (11 to 18) for the receiving mandrel (5) to pass mouldings (6) which are placed on it after alignment on to a deposition transport rail (19).

8. A device as claimed in Claim 7, characterized in that the enclosure (1) has a circular cross-section.

9. A device as claimed in Claim 7, characterized in that the receiving mandrel (5) can be tilted about a horizontal axis (17).

10. A device as claimed in Claim 7, characterized in that the receiving mandrel (5) can be rotated about a vertical is (13).

11. A device as claimed in Claim 8, characterized in that the enclosure (1) is open at the upper side for collecting mouldings (6) thrown into it.

12. A device as claimed in Claim 7, characterized in that a first air nozzle (8a) directed vertically upwards is provided for the vertical air current (9a) and in that a second air nozzle (8b) is aligned transversely to or at an angle to the first air nozzle (8a) so as to emit a turbulence current (9b).

13. A device as claimed in Claim 7, characterized in that the first air nozzle (8a) is provided in the receiving mandrel (5).


## Revendications

1. Procédé d'alignement et de transfert en ordre de pièces moulées (6) ayant un percement tubulaire (7), en particulier d'armatures de bobines de transformateurs, caractérisé en ce que des pièces moulées individuelles (6) sont introduites les unes après les autres d'en haut dans une chambre à tourbillonnement d'air située au-dessus d'un mandrin porte-pièce (5) ayant la forme du percement (7) pratiqué dans la pièce moulée (6), en ce que la pièce moulée individuelle, tout en étant en suspension libre, est exposée dans la chambre à tourbillonnement d'air à un tourbillonnement d'air ayant au moins un courant d'air dirigé vers le haut, jusqu'à ce que la pièce moulée (6) soit alignée par son percement (7) par rapport au mandrin porte-pièce (5) de façon que la pièce moulée (6) tombe sur le mandrin porte-pièce (5) en raison d'une diminution de la résistance de l'air, due à l'alignement, et en ce que le mandrin porte-pièce (5) transfère la pièce moulée (6) à l'état alignée vers au moins un rail de transport récepteur (19).

2. Procédé selon la revendication 1, caractérisé en ce que le tourbillonnement d'air est formé de plusieurs courants d'air (9a, 9b) auxquels sont imprimées des directions différentes.

3. Procédé selon l'une quelconque des revendications 1 ou 2, caractérisé en ce que la position de la pièce moulée (6) sur le mandrin porte-pièce est surveillée à l'aide de détecteurs de contrôle de présence et d'orientation.

4. Procédé selon la revendication 2, caractérisé en ce que le tourbillonnement d'air est formé d'un premier courant d'air (9a) dirigé vers le haut et d'un deuxième courant d'air (9b) soufflant principalement transversalement à celui-ci.

5. Procédé selon la revendication 4, caractérisé en ce que le premier courant d'air (9a) monte à un débit constant.

6. Procédé selon la revendication 4, caractérisé en ce que le deuxième courant d'air (9b) fonctionne par impulsions.

7. Dispositif pour la mise en oeuvre du procédé selon les revendications 1 à 6, caractérisé par
– un mandrin porte-pièce (5) situé à l'endroit du fond (3) d'une enveloppe verticale (1) et orienté verticalement vers le haut, mandrin dont la section transversale correspond à la section transversale du percement (7) pratiqué dans une pièce moulée alignée (6) devant être posée sur celui-ci,
– des buses de sortie d'air (8a, 8b) produisant, dans l'enveloppe (1) et au-dessus du mandrin porte-pièce (5), un tourbillonnement d'air dans lequel la pièce moulée (6) peut être animée d'un mouvement de rotation tout en étant en suspension libre,
– des détecteurs (10a, 10b, 10c) qui relèvent la position de la pièce moulée (9) après son transfert sur le mandrin porte-pièce,
– un mécanisme de déplacement (11 à 18) pour le mandrin porte-pièce (5), destiné à transférer à un rail de transport (19) récepteur des pièces moulées (6) qui se sont posées à l'état aligné sur le mandrin.

8. Dispositif selon la revendication 7, caractérisé en ce que l'enveloppe (1) présente une section transversale circulaire.

9. Dispositif selon la revendication 7, caractérisé en ce que le mandrin porte-pièce (5) peut basculer autour d'un axe horizontal (17).

10. Dispositif selon la revendication 7, caractérisé en ce que le mandrin porte-pièce (5) peut tourner autour d'un axe vertical (13).

11. Dispositif selon la revendication 8, caractérisé en ce que l'enveloppe (1) est ouverte par le haut pour la réception de pièces moulées (6) jetées dans celle-ci.

12. Dispositif selon la revendication 7, caractérisé en ce qu'une première buse à air dirigée verticalement vers le haut (8a) est prévue pour le courant d'air vertical (9b) et en ce qu'une deuxième buse à air (8b) est dirigée transversalement à la première buse à air (8a) ou fait un angle avec celle-ci pour délivrer un courant de tourbillonnement (9b).

13. Dispositif selon la revendication 7, caractérisé en ce que la première buse à air (8a) est prévue dans le mandrin porte-pièce (5).

Fig.1

Fig.2

Fig.4

Fig.3

Fig.5

Fig.6

Fig.7